# EUROPEAN PATENT APPLICATION

(11) **EP 2 106 963 A1**
(43) Date of publication of application: **07.10.2009**
(21) Application number: 08380107.6
(22) Date of filing: 04.04.2008
(51) Int. Cl.: B60N 2/48

(54) **Headrest for motor vehicle seats**

(71) Applicant: Batz, S.Coop., 48140 Igorre (Bizkaia) (ES)
(72) Inventor: Corral Rodriguez, Pedro, 48002 Bilbao (Bizkaia) (ES); Palacio Argüelles, Joseba, 48980 Santurtzi (Bizkaia) (ES); Bidaguren Diego, Iñigo, 48003 Bilbao (Bizkaia) (ES)
(74) Representative: Igartua, Ismael

(57) **Abstract**

Headrest for motor vehicle seats, comprising a fixed part (2) and a displaceable part (3) movable in relation to said fixed part (2) from a rest position to an active position. Said fixed part (2) and said displaceable part (3) are connected by means of at least one top linkage (4) and one bottom linkage (5). One of said linkages (4,5) comprises a lever (6) pivotably connected to the fixed part (2) and the displaceable part (3), and the other one comprises a pin and slot connection (7,8).

## Description

### TECHNICAL FIELD

The present invention relates to a headrest for motor vehicle seats.

### PRIOR ART

There are known examples of so-called active headrests that comprise two parts, a fixed part and a displaceable part, the displaceable part being movable, in the event that the vehicle receives a rear impact, from a rest position in which the displaceable part is attached to the fixed part, to an active position. In said active position, the displaceable part is separated from the fixed part and displaced towards the occupant of the seat, thereby reducing the distance travelled by the head of the occupant until it is supported on the headrest, and thereby reducing the risk of said occupant suffering whiplash.

DE 199 51 966 A1 describes an active headrest in which the fixed part and the displaceable part are connected by a top lever and a bottom lever pivotably connected to the fixed part and the displaceable part. EP 1 193 114 A1 provides an active headrest that also comprises at least one top lever and a bottom lever. In the headrest described in EP 1 193 114 A1, the top lever and the bottom lever are parallel, as a result of which the displaceable part remains at the same angle during its path from the rest position to the active position. On the other hand, EP 1 572 494 A1 discloses an active headrest in which the top lever and the bottom lever are not parallel, which allows paths with more suitable angles to be defined for the displaceable part, in particular if the lengths of the top and bottom levers are different.

### DISCLOSURE OF THE INVENTION

It is the object of the invention to provide an active headrest as defined in the claims.

The headrest of the invention comprises a fixed part and a displaceable part that is movable in relation to said fixed part from a rest position to an active position. The fixed part and the displaceable part are connected by at least one top linkage and one bottom linkage. One of said linkages comprises a lever pivotably connected to the fixed part and to the displaceable part, and the other linkage comprises a pin and slot connection.

In the headrest of the invention at least one of the levers that connects the fixed part and the displaceable part is dispensed with, as a result of which less pieces are used, thus making the solution simpler and less expensive.

Moreover, the headrest of the invention enables the definition of the angle of the displaceable part along all the points of its path from the rest position to the active position. All that is required to achieve this is to design the pin and slot connection in such a way that the slot guides the pin along a path that ensures the displaceable part is at the required angle at each point of its path, it being able to be adapted optimally to the direction in which the occupant's head hits the headrest in different situations.

These and other advantages and characteristics of the invention will be made evident in the light of the drawings and the detailed description thereof.

### DESCRIPTION OF THE DRAWINGS

Figure 1 shows a profile view of an embodiment of the headrest of the invention, the displaceable part being in its rest position.
Figure 2 shows a profile view of the embodiment of figure 1, the displaceable part being in its active position.
Figure 3 shows a perspective view the embodiment of figure 1, the displaceable part being in its rest position.
Figure 4 shows a first perspective view of the embodiment of figure 1, the displaceable part being in its active position.
Figure 5 shows a second perspective view of the embodiment of figure 1, the displaceable part being in its active position.
Figure 6 shows a cross-sectional profile view of the embodiment of figure 1, the displaceable part being in its rest position.
Figure 7 shows a cross-sectional profile view of the embodiment of figure 1, the displaceable part being in its active position.

### DETAILED DISCLOSURE OF THE INVENTION

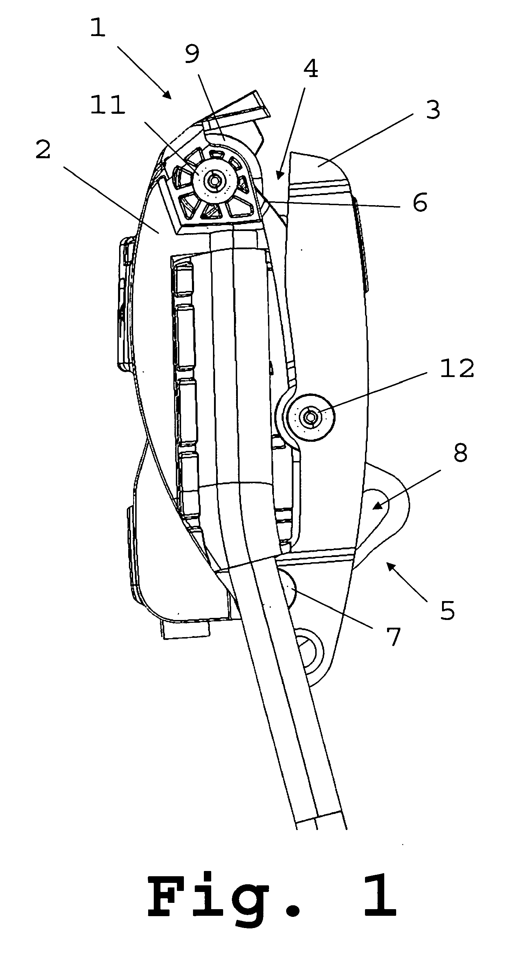

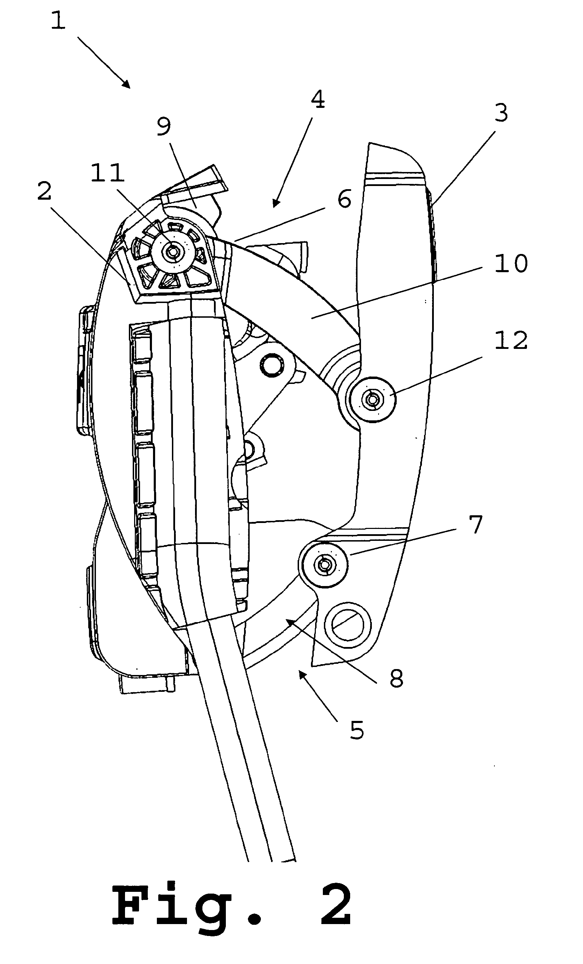

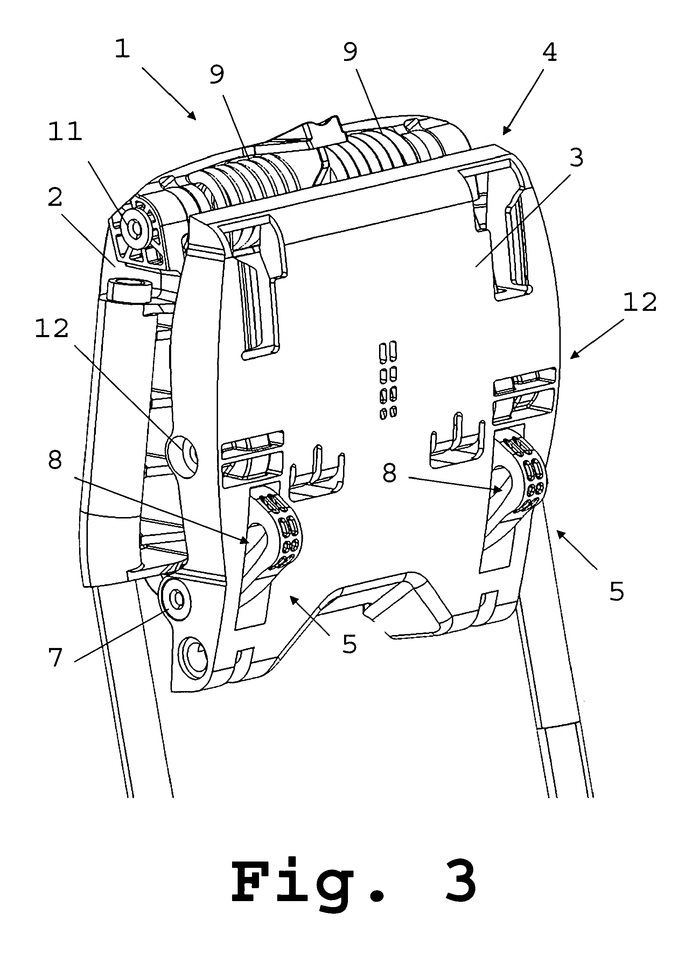

With reference to the embodiment shown in the figures, the headrest 1 of the invention comprises a fixed part 2 and a displaceable part 3, said displaceable part 3 being movable in relation to said fixed part 2 from a rest position (figures 1, 3 and 6) to an active position (figures 2, 4, 5 and 7). The fixed part 2 and the displaceable part 3 are connected, in this embodiment, by a top linkage 4 and two lateral bottom linkages 5. The top linkage 4 comprises a lever 6 pivotably connected to the fixed part 2 and to the displaceable part 3, and the bottom linkages 5 comprise a respective pin and slot connection.

In the embodiment shown in the figures, the pin and slot connections comprise a respective pin 7 disposed on the displaceable part 3 and a respective slot 8 disposed on the fixed part 2.

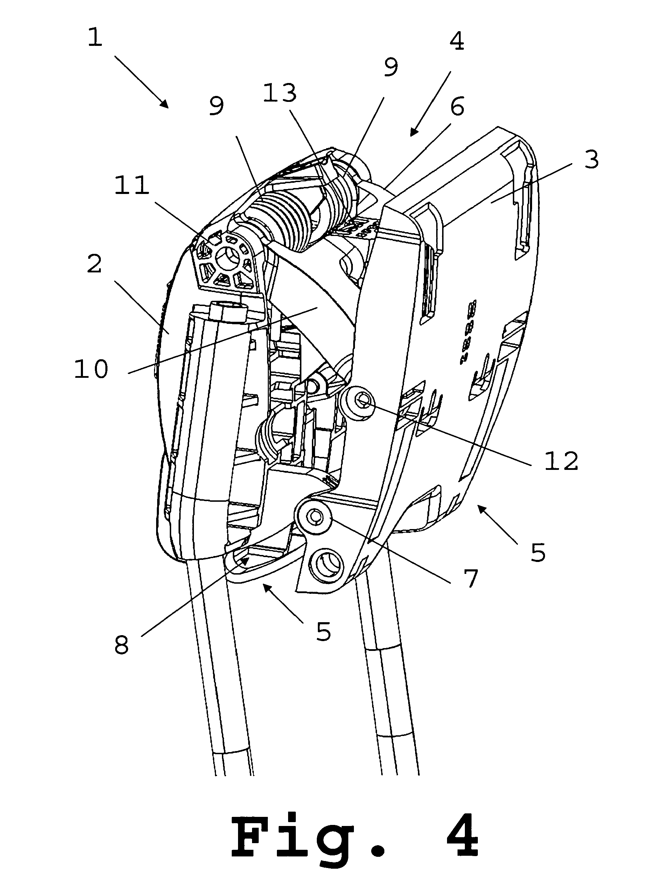

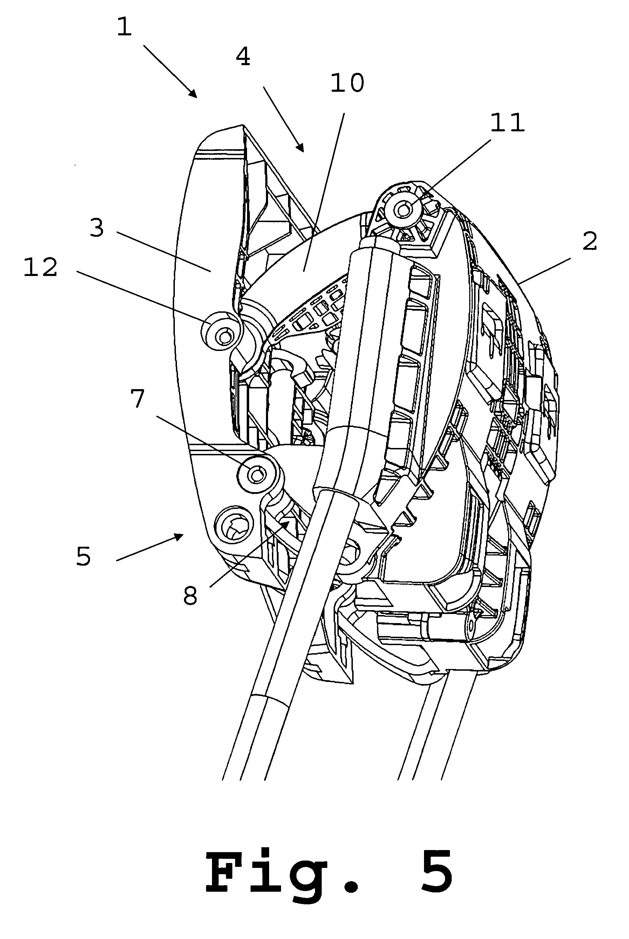

In this embodiment the lever 6 comprises, as can be seen in figures 4 and 5, two lateral arms 10, one of the ends of each lateral arm 10 pivoting in relation to a respective shaft 11 disposed on the fixed part 2, both shafts 11 being coaxial, the other end of each lateral arm 10 pivoting in relation to a respective shaft 12 of the displaceable part 3, both shafts 12 being coaxial. The lever 6 also comprises a central body 13 by means of which both lateral arms 10 are connected together.

The headrest 1 of the invention comprises operating means for moving the displaceable part 3 in relation to the fixed part 2. In this embodiment, the operating means act on the lever 6 and comprise two prestressed springs 9, one on each side of the headrest 1 and each of them connected to one lateral arm 10. The prestressed springs 9 are double torsion springs that comprise a coiled central part, a straight first end connected to the fixed part 2, and a straight second end connected to the respective lateral arm 10. Both prestressed springs 9 may be connected to each other by a central section fixed to the fixed part 2.

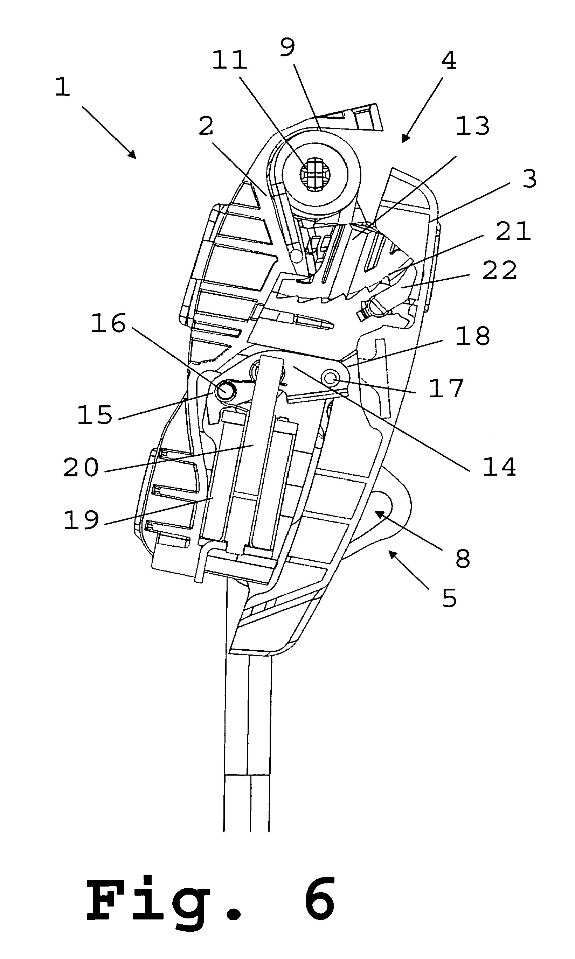

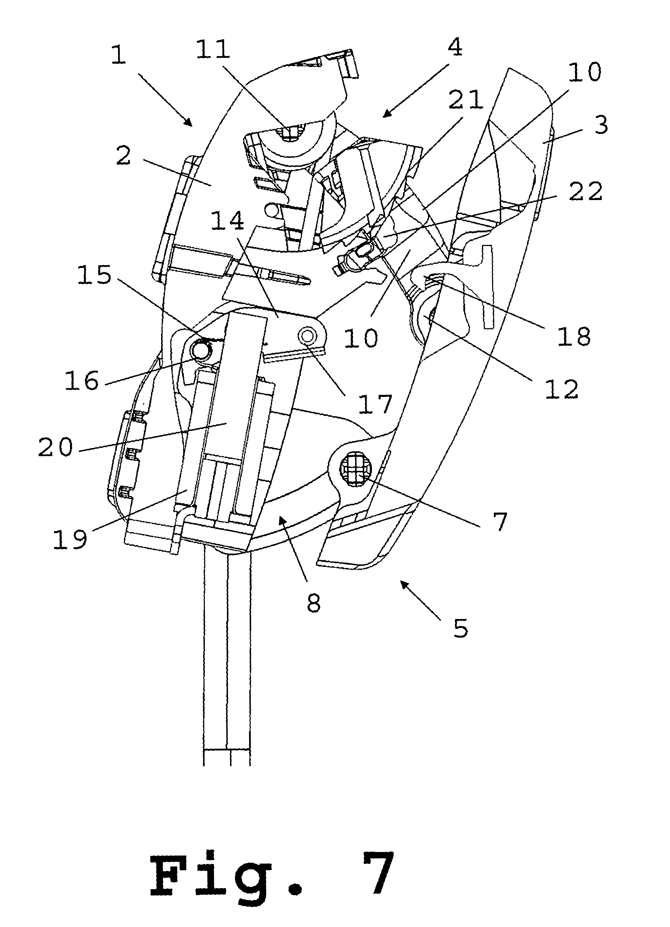

The headrest 1 also comprises retention means for keeping the displaceable part 3 in its rest position. In the event of a collision, the retention means are released and the prestressed springs 9 move the lever 6, said lever 6 moving the displaceable part 3 to its active position at the same time. In this embodiment, as can be seen in figures 6 and 7, said retention means comprise a retention cantilever 14 pivotably disposed in relation to the fixed part 2 and a retention spring 15 that acts on said retention cantilever 14. The headrest 1 also comprises release means connected to the fixed part 2 which act on said retention cantilever 14 in the event of a collision, counteracting the force of the retention spring 14 and releasing the retention means.

In the embodiment shown in the figures, one end of the retention cantilever 14 comprises a transverse retention shaft 16 fastened to the fixed part 2, and the other end of said retention cantilever 14 comprises a transverse retention shaft 17 that is housed, when the headrest 1 is in the rest position, in a hook 18 disposed on the displaceable part 3.

The headrest 1 also comprises release means for releasing the retention means in the event of a collision. Said release means comprise a magnet 19 that comprises an operating shaft 20 connected to the retention cantilever 14, although said release means may alternatively comprise, for example, a pyrotechnic activator. In the event of a collision, the magnet 19 is powered and the operating shaft 20 of said magnet 19 is moved. In this way, said operating shaft 20 causes the retention cantilever 14 to pivot, thereby counteracting the force that the retention spring 15 exerts and releasing the retention shaft 17 of the hook 18.

In the embodiment shown in the figures locking means are also included to prevent the displaceable part 3 from moving back towards the fixed part 2 when it switches from the rest position to the active position. Said locking means comprise a cogged sector 21 connected to the central body 13 of the lever 6 and a ratchet 22 that interacts with said cogged sector 21.

The displaceable part 3 is guided to the fixed part 2 by the pin and slot connection, with the result that the angle of said displaceable part 3 in its rest position, in its active position and at all points on the path of said displaceable part 3 from the rest position to the active position, is determined by said pin and slot connection. Thus, depending on the shape of the slot 8 of the fixed part 2, the variation of the inclination of the displaceable part 3 will be one or another. Said slot 8 may be designed in such a way that said variation of the angle may be the most suitable for reducing the risk of the occupant suffering whiplash in the event of a collision. In a preferred embodiment, said slot 8 defines a curvilinear path. As can be seen in the figures, it is the slot 8 that delimits the end of stroke of the displaceable part 3.

## Claims

1. Headrest for motor vehicle seats, comprising
a fixed part (2) and
a displaceable part (3) movable in relation to said fixed part (2) from a rest position to an active position,
said fixed part (2) and said displaceable part (3) being connected by means of at least one top linkage (4) and one bottom linkage (5), and one of said linkages (4,5) comprising a lever (6) pivotably connected to the fixed part (2) and the displaceable part (3),
**characterised in that** the other of said linkages (4,5) comprises a pin and slot connection (7,8).

2. Headrest according to claim 1, wherein the top linkage (4) comprises the lever (6) and the bottom linkage (5) comprises the pin and slot connection (7,8).

3. Headrest according to claims 1 or 2, wherein the pin and slot connection (7,8) comprises a pin (7) disposed in the displaceable part (3) and a slot (8) disposed in the fixed part (2).

4. Headrest according to any of the preceding claims, wherein the pin and slot connection (7,8) comprises a slot (8) that defines a curvilinear path.

5. Headrest according to any of the preceding claims, comprising operating means that act on the lever (6) in order to move the displaceable part (3) in relation to the fixed part (2).

6. Headrest according to claim 5, wherein the operating means comprise at least one prestressed spring (9), one end of said prestressed spring (9) being connected to the fixed part (2) and the other end of said prestressed spring (9) being connected to the lever (6).

7. Headrest according to claim 6, wherein the lever (6) comprises two lateral arms (10) and a central body (13) that connects both lateral arms (10).

8. Headrest according to claim 7, wherein it comprises a prestressed spring (9) for each lateral arm (10), one end of each prestressed spring (9) being connected to the respective lateral arm (10).
